(19) Europäisches Patentamt European Patent Office Office européen des brevets

(11) **EP 0 900 416 B1**

(12) **EUROPEAN PATENT SPECIFICATION**

(45) Date of publication and mention
of the grant of the patent:
**21.10.2009 Bulletin 2009/43**

(51) Int Cl.:
***G05D 1/02*** *(2006.01)*

(21) Application number: **97918461.1**

(22) Date of filing: **15.04.1997**

(86) International application number:
**PCT/SE1997/000634**

(87) International publication number:
**WO 1997/039394 (23.10.1997 Gazette 1997/45)**

(54) **A METHOD FOR DETERMINING THE POSITIONS OF A PLURALITY OF ANONYMOUS FIXED REFERENCE OBJECTS FOR MOBILE SURFACE TRANSPORTATION AND A DEVICE FOR DETERMINING SAID POSITIONS**

VERFAHREN UND VORRICHTUNG ZUM BESTIMMEN DER POSITION EINER VIELZAHL ANONYMER REFERENZOBJEKTE IN EINEM MOBILEN OBERFLÄCHENTRANSPORTSYSTEM

PROCEDE PERMETTANT DE DETERMINER LA POSITION DE PLUSIEURS OBJETS DE REFERENCE FIXES ET ANONYMES DANS UN SYSTEME DE TRANSPORT MOBILE ET DISPOSITIF PERMETTANT DE DETERMINER CES POSITIONS

(84) Designated Contracting States:
**AT BE CH DE DK ES FI FR GB GR IE IT LI LU MC NL PT SE**

(30) Priority: **15.04.1996 SE 9601440**

(43) Date of publication of application:
**10.03.1999 Bulletin 1999/10**

(73) Proprietor: **Danaher Motion Särö AB**
**429 80 Särö (SE)**

(72) Inventor: **ÅSTRÖM, Karl-Erik**
**S-222 20 Lund (SE)**

(74) Representative: **Mossmark, Anders Lennart et al**
**Albihns AB**
**P.O. Box 142**
**401 22 Göteborg (SE)**

(56) References cited:
**EP-A- 0 366 350      EP-A- 0 390 051**
**EP-A- 0 405 795      EP-A- 0 488 828**
**EP-A- 0 635 773      US-A- 4 647 784**
**US-A- 4 788 441      US-A- 4 790 402**

**US-A- 4 811 228**

- **"Invariancy Methods for Points, Curves and Surfaces in Computational Vision"; KALLE ASTROEM, Lund Tekniska Hoegskola, 30 May 1996, pages 39-76.**
- **HEYDEN A.; ASTROEM K.: 'A canonical framework for sequences of images' PROCEEDINGS OF IEEE WORKSHOP ON REPRESENTATION OF VISUAL SCENES 24 June 1995, CAMBRIDGE, MA, USA, pages 45 - 52**
- **ZHANG Z.; FAUGERAS O.: 'Building a 3D world model with a mobile robot; 3D line segment representation and integration' PROCEEDINGS OF THE INTERNATIONAL CONFERENCE ON PATTERN RECOGNITION vol. 1, no. 10, 16 June 1990 - 21 June 1990, ATLANTIC CITY, USA, pages 38 - 42**
- **MCLAUCHLAN P.F.; MURRAY D.W.: 'A unifying framework for structure and motion recovery from image sequences' PROCEEDINGS OF THE FIFTH INTERNATIONAL CONFERENCE ON COMPUTER VISION 20 June 1995 - 23 June 1995, CAMBRIDGE, MA, USA, pages 214 - 320**
- **Aström K.: 'Automatic Mapmaking' Proceedings of the 1st IFAC International Workshop on Intelligent Autonomous Vehicles, Southampton, UK, Pergamon Press, 1993, pages 179-184 XP001155634**
- **HEYDEN A.: 'Reconstruction from Image Streams: Continuous Multilinear Constraints' SSAB SYMPOSIUM LUND, SWEDEN,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 0 900 416 B1

**EP 0 900 416 B1**

**Description**

TECHNICAL FIELD:

The present invention relates to a method and a device for determining the positions of anonymous fixed reference objects according to the preamble of claims 1 and 2 respectively.

BACKGROUND ART:

The traditional technology for automatic control of vehicles AGV by means of following control loops in the surface has increasingly been replaced by more sophisticated control systems, such as searching for fixed reference points in a room. By knowing the position of the reference points and by measuring a plurality of angles to these objects, the position of the AGV can be determined and used for controlling the AGV to predetermined positions. From US-patent 4,811,228 a rotating laser is known which searches an area in which fixed reflecting objects are positioned, and by measuring a plurality of angles between the AGV and the different objects, the position of the AGV can be determined.
When installing a new AGV system the positions of the fixed reference objects must be determined. This has until now, to a high degree, been done manually by measuring the positions of the reference objects and entering these in a co-ordinate system which represents an area in which the AGV system is to be installed. Usually the co-ordinate system, to be more precise, represents a plane which extends in parallel with the surface on which the vehicle AGV is intended to move. Determining the positions has so far been done by physically measuring the position of the reference objects relative to the axes of the co-ordinate system, after which their co-ordinates have been entered into a computerized control system. The measurement is however time-consuming, and in practice difficult to carry out, since most rooms in which the AGV system has been installed also house large objects, such as for example storage shelves, machinery, etc.
A semi-automatic approach to the problem of mapmaking for a commercial laser guided vehicle is disclosed in the article "Automatic Mapmaking" of K. Aström (Proceedings of the 1st IFAC International Workshop on Intelligent Autonomous Vehicles, Southampton, UK, Pergamon Press, 1993, pages 179-184, XP001155634). The vehicle is equipped with a laser scanner that measures the direction but not the distance to identical beacons; the structure and the motion are calculated using a non-linear optimization method. A reasonably good initial estimate of structure and motion is needed to use this method. The motion is calculated at a discrete set of times. The association of angle measurements to the correct corresponding beacon is also done manually. This is both time-consuming and difficult.
Further, the following background art is hereby acknowledged:

A. Heyden, K. Åström: 'A canonical framework for sequences of images', Proceedings of IEEE Workshop on Representation of Visual Scenes, CAMBRIDGE, MA, USA, 24 June 1995, pages 45-52, XP 010151000;

EP 0 390 051 (A);

Z. Zhang, O. Faugeras: 'Building a 3D world model with a mobile robot; 3D line segment representation and integration', Proceedings of the International Conference on Pattern Recognition, ATLANTIC CITY, 16-21 June 1990, vol. 1, no. 10, pages 38-42, XP 000166384

P.F. McLauchlan, D. W. Murray: 'A unifying framework for structure and motion recovery from image sequences', Proceeding of the fifth International Conference on Computer Vision, CAMBRIDGE, MA, USA, 20-23 June 1995, pages 214-320, XP 010147083 , and

A. HEYDEN: "Reconstruction from Image Streams: Continuous Multilinear Constraints", SSAB SYMPOSIUM, 7-8 March 1996 LUND, SWED**EN.**

SUMMARY OF THE INVENTION:

The object of the present invention is to eliminate manual measuring.
Said object is achieved by means of a method and a device according to the present invention, the characteristics of
which will become apparent from the appended patent claim 1 and 2 respectively.

DESCRIPTION OF THE FIGURES:

The invention will in the following be described more closely, by means of an example of embodiment, with reference to the appended drawings where:

Fig. 1   shows a schematic plan of the room in which the AGV is to be installed;

Fig. 2   shows a diagram of measured time-angle pairs; and

Fig. 3   shows a flowchart of a method according to the present invention.

APPENDIX:

Appendix A shows how multi-linear conditions can be achieved both in continuous and discrete time.

PREFERRED EMBODIMENTS:

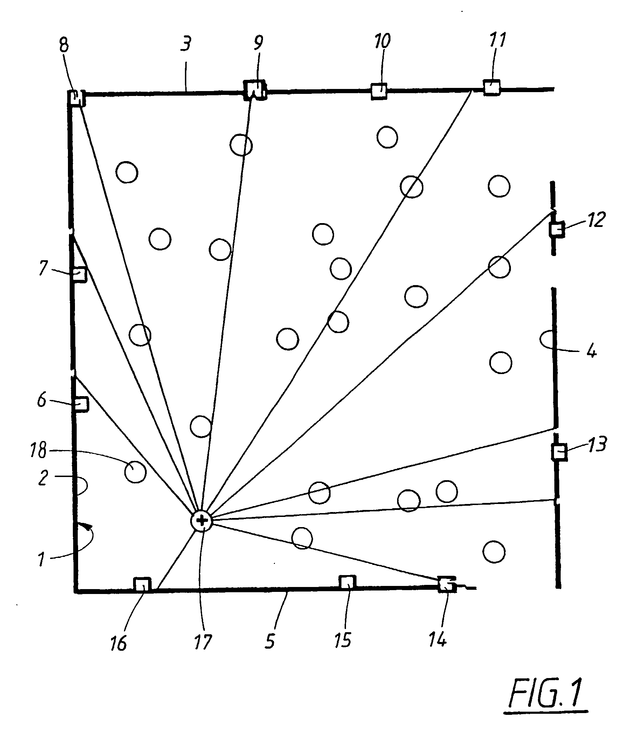

Fig. 1 shows a schematic plan view of a space in which an AGV system has been installed. In the example shown, the system is based on US-patent 4,811,228 which describes the use of a rotating laser beam, which searches a plane which for example extends horizontally and essentially parallel to the floor on which an automatically controlled vehicle AGV is intended to move, in which the rotation takes place around a mainly vertical axis. In the example shown the room in question has been drawn as a square room 1 with four walls 2, 3, 4, 5 on which a plurality of anonymous fixed reference objects 6-16 have been positioned at such a height that they are within the search area of the laser beam. In practice, the reference objects extend vertically to such an extent that it is always possible for the object and the beam to coincide. In the system in question where the issued signal is an electromagnetic signal, such as light, for example a laser beam, the reference objects are reflector organs which are arranged to reflect an incident beam back to the laser unit where it is detected together with information about bearing, i.e. angle in the plane of rotation relative to a chosen reference-angle, for example the longitudinal axis of the vehicle. The reflector organs are preferably such that the incident beam is reflected in the same direction as the incident direction, so-called retro-reflectors. The reflector organs are positioned at fixed positions, which can be chosen arbitrarily. In the simplified case shown the reflexes are, however, arranged along four planes, i.e. the walls, but in practice the reflexes can be positioned irregularly and arbitrarily in the room.

Essentially the same above mentioned equipment can be used for determining the positions of reflectors, in the simpliest case, a vehicle with a rotating laser. The reference numeral 17 denotes the measuring point or normal of the plane of the paper, around which for example the search beam rotates in the measuring room 1. According to the invention, the positions of the fixed reference objects 6-16 are determined and possibly also directions in a plane by searching the plane by means of a sweeping search-signal while detecting returned echo-signals together with the detection of information of the bearing of the echo-signal. The detection takes place during movement of the measuring point 17 in the room 1, whereby a plurality of further measuring points 18 is obtained, which in principle are arbitrarily distributed across the room. In practice, the simplest way of achieving this is by moving or driving the equipment or vehicle around in the room during repeated measurement, the application of a technique called "multilinear constraints in continuous time" makes it possible to make the measurements while the vehicle with the rotation laser detector is moving.

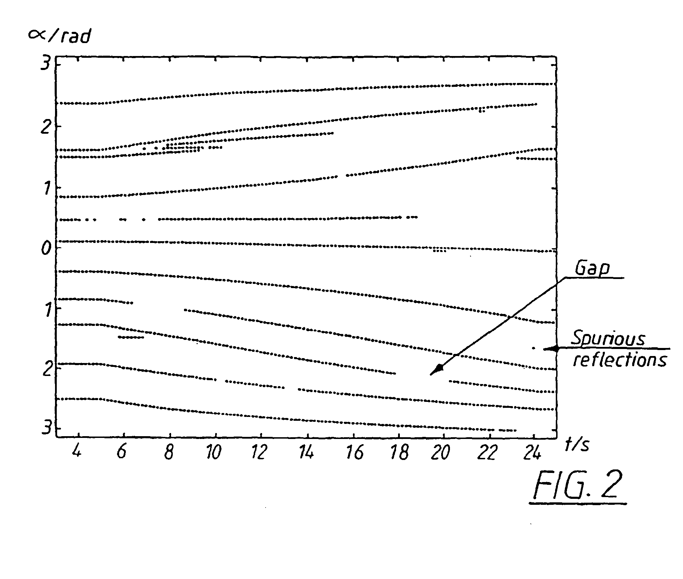

During continuous movement a number of angles or bearings fixed in time can thus be obtained. These time-angle pairs can be illustrated in a diagram, as shown in Fig. 2, where each point of co-ordinates $(t, \alpha)$ corresponds to a measured angle $\alpha$ with a time t. The gaps show times when for example an obstacle has been line of sight when it was to make a measurement. False reflections are shown by small dots which do not form a regular pattern.

The present invention further describes an analysis of the angle material measured, which results in determining the co-ordinates of all the reflector organs. In order to obtain this, the following steps are carried out:

A. Automatic association of bearings to anonymous objects:

First those angles are identified which have been measured to the same, anonymous reflector organ.
This is solved by extrapolating earlier angle measurements and checking which of the following angle measurements well matches this extrapolation.
It also allows correct identification even if the reflector is temporarily hidden for the laser beam.
The result is that part of the angle measurements can be grouped into subsets of the same identity and where other, spurious measurements can be sorted out.

B. Calculation of reflector positions and position uncertainties:

Starting from a crude estimation of reflector positions and a corresponding high degree of uncertainties, as the vehicle moves along and the bearings to the reflectors become available from a larger area of the floor, the position estimations are refined and the position uncertainties correspondingly reduced by application of the "Continuous trilinear constraint" technique (as described in "INVARIANCY METHODS FOR POINTS, CURVES AND SURFACES IN COMPUTATIONAL VISION" by Kalle Åström, Lund Tekniska Högskola, May 30, 1996, ISBN 91-628-2022-2, ISSN 0347-8475, ISRN LUTFD2/TFMA-96/1006-SE, ISRN LUTFD2/TFMA-96/5002-SE) involving complex matrix calculations using e.g. the Newton-Raphson method (see Appendix A).

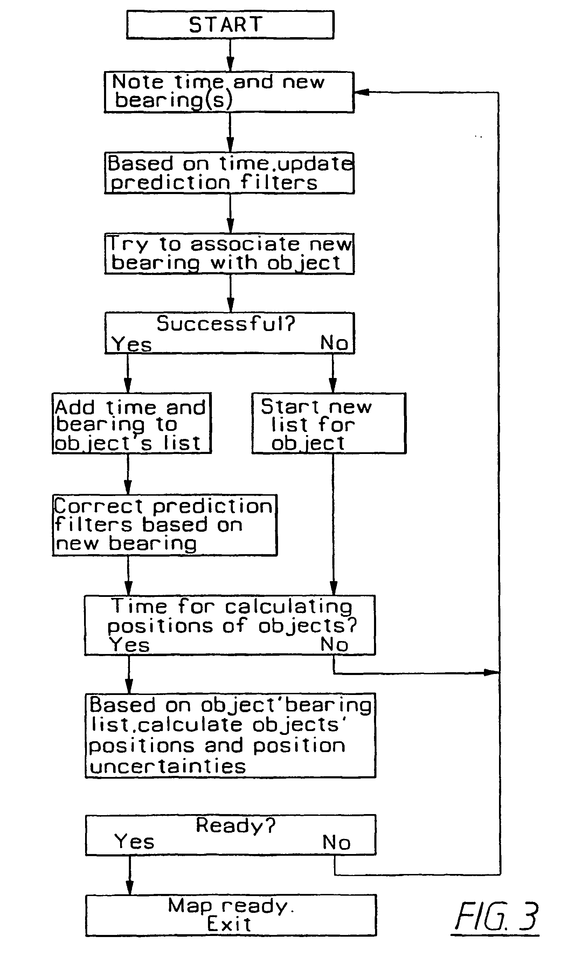

The flowchart of Fig. 3 further shows how these above mentioned steps can be applied: In the inner loop the bearing and time values are sorted and associated with the reflectors. The prediction filters used, take into account the movements that is continuously imposed on the vehicle. The outer loop is performed when a sufficiently high number of measurements and/or a sufficiently high number of additional reflectors has been added. First the already known reflector positions are refined, and these new values are then the basis for calculating the positions, and uncertainties thereof, of the additional reflectors. When the position of all reflectors has been calculated and the position uncertainties has been reduced to the required level, the reflector map is complete and the measurements finished.

In the example in question the reflector organs 6-16 have a limited area of reflection, within which detection can be obtained, which may be used for determining the direction of the reflector organs 9 and thereby also whether a received reflex has been received from a certain reflector organ. The measurement equipment comprises a computer for collecting measuring data relating to received reflexes and their bearing.

Although the shown embodiments of the present invention have been described in detail with reference to the appended figures it should be realized that the invention is not limited to these specific embodiments and that different changes or modifications can be made by a person skilled in the field without deviating from the scope defined by the appended patent claims. The reference objects can for example be natural objects in any environment.

Furthermore, for each time value, more than one bearing may be registered, e.g. by detecting a plurality of object bearings simultaneously with the aid of a matrix detector (e.g. a camera/flash system).

APPENDIX A

### 3.5 Continuous trilinear forms

In the previous sections, the structure and motion problem was formulated and solved for a discrete set of images taken at times $t_1,...\ t_n$. In this section, the continuous analogy of the multilinear constraints will be discussed. This is of particular interest for laser guided navigation, where the angles are not measured synchronously, at a discrete set of times.

### The calibrated continuous trilinear form

Consider the time dependent calibrated camera matrix $P(t) = [R(t)\ c(t)]$. Choose the object coordinate system so that $P(0) = [I\ 0]$. Let the Taylor expansion of the rotation matrix $R(t)$ and the vector c(t) be

$$R(t) = I + tR^{(1)} + t^2 R^{(2)} + o(t^3) \ ,$$

$$c(t) = 0 + tc^{(1)} + t^2 c^{(2)} + o(t^3) \ .$$

In section 2.5 it was shown that the following continuous calibrated trilinear constraint holds for every image point u(t) with Taylor expansion $u(t) = u^{(0)} + tu^{(1)} + t^2 u^{(2)} + o(t^3)$:

$$\det M = \det \begin{bmatrix} u^{(1)} - R^{(1)}u^{(0)} & c^{(1)} & u^{(0)} & 0 \\ u^{(2)} - R^{(2)}u^{(0)} & c^{(2)} & u^{(1)} & u^{(0)} \end{bmatrix} = 0 \ . \qquad (3.26)$$

Since R is a rotation matrix its first derivative has the form

$$R^{(1)} = \begin{bmatrix} 0 & r_1 \\ -r_1 & 0 \end{bmatrix}$$

and the second part of the Taylor expansion has the form

$$R^{(2)} = \begin{bmatrix} -r_2 & 0 \\ 0 & -r_2 \end{bmatrix} \ .$$

The constraint does not involve $R^{(2)}$. This can be seen by subtracting $r_2$ times the fourth column from the second column in (3.26). The constraint will now be studied in more detail. Introduce the variables

$$\mathbf{c}^{(1)} = \begin{bmatrix} v_1 \\ v_2 \end{bmatrix}, \quad \mathbf{c}^{(2)} = \begin{bmatrix} a_1 \\ a_2 \end{bmatrix} \ , \qquad (3.27)$$

and

$$u^{(0)} = \begin{bmatrix} x_0 \\ y_0 \end{bmatrix}, \quad u^{(1)} = \begin{bmatrix} x_1 \\ y_1 \end{bmatrix}, \quad u^{(2)} = \begin{bmatrix} x_2 \\ y_2 \end{bmatrix} \ . \qquad (3.28)$$

The determinant of $M$ can be written as

$$\det(M) = \begin{bmatrix} v_1 & v_2 & a_1 & a_2 \end{bmatrix} \begin{bmatrix} T_{11} & T_{12} \\ T_{21} & T_{22} \\ T_{31} & T_{32} \\ T_{41} & T_{42} \end{bmatrix} \begin{bmatrix} 1 \\ r_1 \end{bmatrix} \ ,$$

where

$$\begin{array}{ll}
T_{11} = y_1 x_1 y_0 - x_0 y_1{}^2 - y_0{}^2 x_2 + y_0 x_0 y_2, & T_{12} = y_0 x_0 x_1 - x_0{}^2 y_1, \\
T_{21} = -x_1{}^2 y_0 + x_1 x_0 y_1 + y_0 x_0 x_2 - x_0{}^2 y_2, & T_{22} = y_0{}^2 x_1 - y_0 x_0 y_1, \\
T_{31} = y_0{}^2 x_1 - y_0 x_0 y_1, & T_{32} = -y_0{}^3 - y_0 x_0{}^2, \\
T_{41} = -y_0 x_0 x_1 + x_0{}^2 y_1, & T_{42} = y_0{}^2 x_0 + x_0{}^3.
\end{array} \qquad (3.29)$$

Introduce $w = [v_1 \; v_2 \; a_1 \; a_2]$ and $z = [1 \; r_1]^T$. Two tentative algorithms to find w and z have been investigated.

**Algorithm 3.5.1.**

  *1. Start with a crude estimate of $r_1$, for example $r_1 = 0$. Hence $z = [1 \; 0]^T$.*

  *2. For all image directions $u^i$, calculate the corresponding T matrix, here denoted $T^i$. The vector w should be orthogonal to every vector $T^i z$. Given $r_1$, the vector w can be found as the left null space of matrix*

$$\begin{bmatrix} T^1 z & \cdots & T^m z. \end{bmatrix}$$

  *The vector w is found by singular value decomposition.*

*3. Once w is approximately known, z can be found as the right null space of*

$$\begin{bmatrix} wT^1 \\ \vdots \\ wT^m \end{bmatrix} .$$

*4. Repeat steps 2 and 3.*

The above algorithm has been tried experimentally, with success. Further investigations are is needed to establish its convergence properties.

**Algorithm 3.5.2.** *Estimate*

$$S_1 = v_1, \quad S_2 = v_1 r_1, \quad S_3 = v_2, \quad S_4 = v_2 r_1,$$

$$S_5 = a_1, \quad S_6 = a_1 r_1, \quad S_7 = a_2, \quad S_8 = a_2 r_1$$

*as the right null space of*

$$\begin{bmatrix} T_{11}^1 & T_{12}^1 & T_{21}^1 & T_{22}^1 & T_{31}^1 & T_{32}^1 & T_{41}^1 & T_{42}^1 \\ \vdots & \vdots & \vdots & \vdots & \vdots & \vdots & \vdots & \vdots \\ T_{11}^m & T_{12}^m & T_{21}^m & T_{22}^m & T_{31}^m & T_{32}^m & T_{41}^m & T_{42}^m \end{bmatrix} .$$

*Use singular valued decomposition to find w and z according to*

$$\begin{bmatrix} S_1 & S_2 \\ S_3 & S_4 \\ S_5 & S_6 \\ S_7 & S_8 \end{bmatrix} = (w^T z) .$$

These two algorithms have been implemented and tested experimentally. The results are first illustrated with simulated experiments. In these simulations the angles to fifteen beacons were calculated during a period of two seconds. Gaussian noise of different standard deviations was added to the angle measurements. This corresponds approximately to the level of noise in the real measurements. The angle measurements in a two second period was used to estimate the Taylor coefficients of the measured image direction $u^i$ using standard regression techniques. These Taylor coefficients were then used to calculate the Taylor coefficients of the motion ($r_1$, $v_1$, $v_2$, $a_1$, $a_2$), using both algorithms above.

Table 3.1: Standard deviation of estimated motion parameters for different noise levels when using Algorithm 3.5.1.

| σ/mrad | σ[$r_1$] | σ[$v_1$] | σ[$v_2$] | σ[$a_1$] | σ[$a_2$] |
|--------|--------|--------|--------|--------|--------|
| 0 | 0 | 0 | 0 | 0 | 0 |
| 0.1 | 0.0001 | 0.0034 | 0.0012 | 0.0023 | 0.0006 |
| 0.5 | 0.0005 | 0.0198 | 0.0063 | 0.0136 | 0.0029 |
| 1 | 0.0014 | 0.0561 | 0.0144 | 0.0366 | 0.0089 |
| 2 | 0.0033 | 0.1175 | 0.0272 | 0.0758 | 0.0197 |
| 5 | 0.0056 | 0.1893 | 0.0420 | 0.1245 | 0.0362 |

Table 3.2: Standard deviation of estimated motion parameters for different noise levels when using Algorithm 3.5.2.

| σ/mrad | σ[$r_1$] | σ[$v_1$] | σ[$v_2$] | σ[$a_1$] | σ[$a_2$] |
|---|---|---|---|---|---|
| 0 | 0 | 0 | 0 | 0 | 0 |
| 0.1 | 0.0001 | 0.0022 | 0.0007 | 0.0016 | 0.0006 |
| 0.5 | 0.0004 | 0.0125 | 0.0035 | 0.0094 | 0.0028 |
| 1 | 0.0008 | 0.0234 | 0.0064 | 0.0175 | 0.0053 |
| 2 | 0.0021 | 0.0562 | 0.0147 | 0.0402 | 0.0109 |
| 5 | 0.0105 | 0.1518 | 0.0344 | 0.1055 | 0.0357 |

The experiment was repeated 100 times. The standard deviation of the estimated motion parameters are shown in Table 3.1 and Table 3.2. The true values of the motion parameters are $r_1$ = -0.2000, $v_1$ = 0.2182, $v_2$ = 0.8729, $a_1$ = 0 and $a_2$ = 0.4364.

The estimate of the motion parameters can be improved further using methods described in the next section.

**Claims**

1. A method for determining the positions of anonymous fixed reference objects in the form of reflector means (6-16) for guiding an automatic guided vehicle navigating in relation to said reflector means, by using a laser beam rotating in a plane substantially parallel to a transportation surface over which the vehicle is moving, said method including the steps of rotating said laser beam on said vehicle and detecting bearings, referenced to a direction from a measuring point (18) on said vehicle to one or more of said fixed, anonymous reflector means by detecting reflections from the reflector means,
   wherein said method is **characterized by** the following steps:

   - sequentially in time during continuous movement of the vehicle storing said bearings together with the time at which the bearing is valid,
   - creating time-bearing couples,
   - identifying those bearings which have been measured to the same reflector means,
   - computing the positions of said reflector means and the uncertainty of the calculated position of each reflector means, wherein the position is computed using the continuous trilinear constraint technique and
   - continuously computing said positions and uncertainties, diminishing said uncertainties as said vehicle is moved over said transportation surface.

2. A device for determining the positions of anonymous fixed reference objects in the form of reflector means (6-16) for an automatic guided vehicle navigating in relation to said reflector means, including laser scanning means with a laser beam rotatable in a plane substantially parallel to the transportation surface over which the vehicle is moving, said device comprising means for detecting bearings, referenced to a direction fixed to said vehicle from a measuring point (18) on said vehicle to one or more of said fixed, anonymous reflector means by detecting reflections from the reflector means,
   said device being **characterized by**:

   - means for sequentially in time storing said bearings during continuous movement of the vehicle together with the time at which the bearing is valid,
   - means for creating time-bearing couples,
   - means for identifying those bearings which have been measured to the same reflector means,
   - computational means for tracking each reflector means as the vehicle is moved over said transportation surface;
   - means for computing the positions of said reflector means and the uncertainty of the calculated position of each reflector means wherein the position is computed using the continuous trilinear constraint technique and,
   - means for continuously computing said positions and uncertainties and for diminishing said uncertainties as said vehicle is moved over said transportation surface.

# EP 0 900 416 B1

## Patentansprüche

**1.** Verfahren zum Bestimmen von Positionen von anonymen, festen Referenzobjekten in der Form von Reflektorvorrichtungen (8-16) zum Führen eines automatischen, geführten Fahrzeugs, das bezüglich der Reflektoreinrichtungen navigiert, durch Verwenden eines Laserstrahls, der in einer Ebene im wesentlichen parallel zu einer Transportoberfläche rotiert, über die sich das Fahrzeug bewegt, wobei das Verfahren die Schritte eines Rotierens des Laserstrahls auf dem Fahrzeug und eines Erfassens von Peilungen umfasst, die auf eine Richtung von einem Messpunkt (18) auf dem Fahrzeug zu einer oder mehrerer der festen, anonymen Reflektorvorrichtungen durch Erfassen von Reflexionen von den Reflektorvorrichtungen hinweisen, wobei das Verfahren durch die folgenden Schritte **gekennzeichnet** ist:

- Speichern der Peilungen zusammen mit der Zeit, bei der die Peilung gültig ist, sequentiell in einer Zeit während einer kontinuierlichen Bewegung des Fahrzeugs,
- Erzeugen von Zeit-Peilungs-Paaren,
- Identifizieren jener Peilungen, die zu der gleichen Reflektorvorrichtung gemessen worden sind,
- Berechnen der Positionen der Reflektorvorrichtung und der Unsicherheit der berechneten Position jeder Reflektorvorrichtung, wobei die Position unter Verwendung der kontinuierlichen, trilinearen Zwangsbedingungstechnik berechnet wird und
- kontinuierliches Berechnen der Positionen und Unsicherheiten, Vermindern der Unsicherheiten, wenn das Fahrzeug über die Transportoberfläche bewegt wird.

**2.** Gerät zum Bestimmen von Positionen von anonymen, festen Referenzobjekten in der Form von Reflektorvorrichtungen (8-16) für ein automatisches, geführtes Fahrzeugs, das bezüglich der Reflektoreinrichtungen navigiert, einschließlich einer Laserscannvorrichtung mit einem Laserstrahl, der in einer Ebene im wesentlichen parallel zu einer Transportoberfläche rotiert, über die sich das Fahrzeug bewegt, wobei des Gerät eine Vorrichtung zum Erfassen von Peilungen umfasst, die auf eine Richtung fest zu dem Fahrzeug von einem Messpunkt (18) auf dem Fahrzeug zu einer oder mehrerer der festen, anonymen Reflektorvorrichtungen durch Erfassen von Reflexionen von den Reflektorvorrichtungen hinweisen, wobei das Gerät **gekennzeichnet ist durch**:

- eine Vorrichtung zum Speichern der Peilungen während einer kontinuierlichen Bewegung des Fahrzeugs zusammen mit der Zeit, bei der die Peilung gültig ist, sequentiell in einer Zeit,
- eine Vorrichtung zum Erzeugen von Zeit-Peilungs-Paaren,
- eine Vorrichtung zum Identifizieren jener Peilungen, die zu der gleichen Reflektorvorrichtung gemessen worden sind,
- eine Berechnungsvorrichtung zum Verfolgen jeder Reflektorvorrichtung, wenn sich das Fahrzeug über die Transportoberfläche bewegt;
- eine Vorrichtung zum Berechnen der Positionen der Reflektorvorrichtung und der Unsicherheit der berechneten Position jeder Reflektorvorrichtung, wobei die Position unter Verwendung der kontinuierlichen, trilinearen Zwangsbedingungstechnik berechnet wird und,
- eine Vorrichtung zum kontinuierlichen Berechnen der Positionen und Unsicherheiten und zum Vermindern der Unsicherheiten wenn das Fahrzeug über die Transportoberfläche bewegt wird.

## Revendications

**1.** Procédé pour déterminer les positions d'objets de référence fixes anonymes sous la forme de moyens réfléchissants (6 à 16) pour guider un véhicule à guidage automatique navigant par rapport auxdits moyens réfléchissants, en utilisant un faisceau laser tournant dans un plan sensiblement parallèle à une surface de transport, sur laquelle se déplace le véhicule, ledit procédé comprenant les étapes consistant à faire tourner ledit faisceau laser sur ledit véhicule et à détecter des relèvements, référencés dans une direction d'un point de mesure (18) sur ledit véhicule à un ou plusieurs desdits moyens réfléchissants fixes anonymes en détectant des réflexions des moyens réfléchissants, ledit procédé étant **caractérisé par** les étapes suivantes consistant à :

- enregistrer de manière séquentielle dans le temps, pendant un mouvement en continu du véhicule, lesdits relèvements conjointement avec le moment où le relèvement est valide,
- créer des couples de temps-relèvement,
- identifier les relèvements qui ont été mesurés aux mêmes moyens réfléchissants, calculer les positions desdits moyens réfléchissants et l'incertitude de la position calculée de chaque moyen réfléchissant, laquelle position est calculée en utilisant la technique de contrainte trilinéaire continue, et
- calculer en continu lesdites positions et lesdites incertitudes, diminuer lesdites incertitudes à mesure que ledit véhicule se déplace sur ladite surface de transport.

2. Dispositif pour déterminer les positions d'objets de référence fixes anonymes sous la forme de moyens réfléchissants (6 à 16) pour un véhicule à guidage automatique navigant par rapport audits moyens réfléchissants, comprenant des moyens de balayage laser avec un faisceau laser qui peut tourner dans un plan sensiblement parallèle à la surface de transport, sur laquelle se déplace le véhicule, ledit dispositif comprenant des moyens pour détecter des relèvements, référencés dans une direction fixe audit véhicule d'un point de mesure (18) sur ledit véhicule à un ou plusieurs desdits moyens réfléchissants fixes anonymes en détectant des réflexions provenant des moyens réfléchissants, ledit dispositif étant
**caractérisé par** :

- des moyens pour enregistrer lesdits relèvements de manière séquentielle dans le temps pendant un mouvement continu du véhicule, conjointement avec le moment où le relèvement est valide,
- des moyens pour créer des couples de temps-relèvement,
- des moyens pour identifier les relèvements qui ont été mesurés sur les mêmes moyens réfléchissants,
- des moyens de calcul pour suivre chaque moyen réfléchissant à mesure que le véhicule se déplace sur ladite surface de transport ;
- des moyens pour calculer les positions desdits moyens réfléchissants et l'incertitude de la position calculée de chaque moyen réfléchissant, laquelle position est calculée en utilisant la technique de contrainte trilinéaire continue, et
- des moyens pour calculer en continu lesdites positions et lesdites incertitudes et pour diminuer lesdites incertitudes à mesure que le véhicule se déplace sur ladite surface de transport.

_FIG.1_

FIG. 2

START

Note time and new
bearing(s)

Based on time, update
prediction filters

Try to associate new
bearing with object

Successful?
Yes                    No

Add time and
bearing to
object's list

Start new
list for
object

Correct prediction
filters based on
new bearing

Time for calculating
positions of objects?
Yes                    No

Based on object bearing
list, calculate objects'
positions and position
uncertainties

Ready?
Yes                    No

Map ready.
Exit

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4811228 A
- EP 0390051 A

**Non-patent literature cited in the description**

- Automatic Mapmaking. **K. Aström.** Proceedings of the 1st IFAC International Workshop on Intelligent Autonomous Vehicles. Pergamon Press, 1993, 179-184
- **A. Heyden ; K. Åström.** A canonical framework for sequences of images. *Proceedings of IEEE Workshop on Representation of Visual Scenes,* 24 June 1995, 45-52
- **Z. Zhang ; O. Faugeras.** Building a 3D world model with a mobile robot; 3D line segment representation and integration. *Proceedings of the International Conference on Pattern Recognition,* 16 June 1990, vol. 1 (10), 38-42
- **P.F. McLauchlan ; D. W. Murray.** A unifying framework for structure and motion recovery from image sequences. *Proceeding of the fifth International Conference on Computer Vision,* 20 June 1995, 214-320
- **A. HEYDEN.** Reconstruction from Image Streams: Continuous Multilinear Constraints. *SSAB SYMPOSIUM,* 07 March 1996
- **Kalle Åström.** INVARIANCY METHODS FOR POINTS, CURVES AND SURFACES IN COMPUTATIONAL VISION. Lund Tekniska Högskola, 30 May 1996